# EUROPÄISCHE PATENTANMELDUNG

(11) **EP 1 164 793 A2**
(43) Veröffentlichungstag der Anmeldung: **19.12.2001**
(21) Anmeldenummer: 01112322.1
(22) Anmeldetag: 19.05.2001
(51) Int. Cl.: H04N 7/08, H04N 7/087

(54) **Verfahren und Vorrichtung für den Zugriff auf in Videotextsignalen enthaltene Börsendaten**

(30) Priorität: 09.06.2000 DE 10028677
(71) Anmelder: Grundig AG, 90471 Nürnberg (DE)
(72) Erfinder: Schneidzig, Peter, 90471 Nürnberg (DE); Warmuth, Roger, 90471 Nürnberg (DE)

(57) **Zusammenfassung**

Die vorliegende Erfindung betrifft ein Verfahren und eine Vorrichtung für den Zugriff auf in Videotextsignalen enthaltene Börsendaten.

Die Erfindung ist dadurch gekennzeichnet, daß für den Zugriff auf in Videotextsignalen enthaltene individuelle Börsendaten Informationen für den Zugriff auf die individuellen Börsendaten bestimmter Videotextsignale ausgewählt und gespeichert werden, welche den gezielten automatischen Zugriff auf die individuellen Börsendaten ermöglichen.

## Beschreibung

Die vorliegende Erfindung betrifft ein Verfahren und eine Vorrichtung für den Zugriff auf in Videotextsignalen enthaltene Börsendaten.

Es ist bekannt, auf in Videotextsignalen enthaltene Börsendaten zuzugreifen und dazu beispielsweise ein Fernsehgerät mit einem Videotextdecoder zu verwenden. Über die Anwahl entsprechender Videotextseiten ist es möglich, die Börsendaten auf dem Bildschirm des Fernsehgeräts wiederzugeben. Um bestimmte Börsendaten zu erhalten, wie z. B. die Kurse bestimmter Aktien, müssen die die bestimmten Börsendaten enthaltenen Videotextseiten oder Videotextunterseiten ausgewählt werden und die entsprechenden Seitennummem oder Seitenunternummern mittels einer Bedieneinrichtung eingegeben werden.

Die Eingabe der einzelnen Seitennummern oder Seitenunternummern ist sehr aufwendig zeitraubend und fehlerintensiv. Insbesondere ist die Eingabe der einzelnen Seitennummern oder Seitenunternummern auch lästig und unangenehm, wenn die bestimmten Börsendaten regelmäßig, z. B. täglich, überprüft werden sollen. Noch unangenehmer wirkt es sich aus, daß es längere Zeit dauert, bis die einzelnen Videotextseiten oder Videotextunterseiten aus dem Videotextsignal, in dem alle Videotextseiten und -unterseiten seriell übertragen werden, vom Videotextdecoder geladen und auf dem Bildschirm dargestellt werden können.
In diesem Zusammenhang sind lernfähige Videotextdecoder bekannt geworden. Derartige Videotextdecoder ermitteln die Gewohnheiten von Benutzer, indem sie die Seitennummern der von den Benutzern regelmäßig aufgerufenen Videotextseiten oder Videotextunterseiten speichern und die entsprechenden Videotextseiten oder Videotextunterseiten während des Betriebs regelmäßig aktualisieren und in einem Speicher ablegen. Dadurch wird zumindest gewährleistet, daß die einzelnen Videotextseiten oder Videotextunterseiten ohne Wartezeit dargestellt werden können.

Alle bisher bekannt gewordenen Vorrichtungen für den Zugriff auf in Videotextsignalen Daten weisen aber den Nachteil auf, daß die einzelnen Seitennummern oder Unterseitennummern von einem Benutzer eingegeben werden müssen. Dies ist insbesondere dann nachteilig, wenn auf eine Vielzahl von Daten auf einer Vielzahl von Videotextseiten und/oder Videotextunterseiten zugegriffen werden soll, weil dann entsprechend viele Seitennummern und/oder Unterseitennummern eingegeben werden müssen. Weiterhin ist es bei den bekannten Vorrichtungen nachteilig, daß es dann immer noch nötig ist, die gewünschten Daten aus der Vielzahl der Daten der einzelnen Videotextseiten und/oder Videotextunterseiten zu isolieren.

Es ist daher Aufgabe der vorliegenden Erfindung, ein Verfahren und eine Vorrichtung für den Zugriff auf in Videotextsignalen enthaltene Daten, insbesondere Börsendaten, anzugeben, die eine einfache individuelle Auswahl bestimmter Daten, insbesondere Börsendaten, ermöglicht.

Bei der vorliegenden Erfindung wird diese Aufgabe durch die Merkmale der Ansprüche 1 und 8 gelöst.

Bei der Erfindung wird dabei von der Überlegung ausgegangen, daß für den Zugriff auf in Videotextsignalen enthaltene individuelle Daten, wie beispielsweise Börsendaten, Informationen für den Zugriff auf die individuellen Daten, insbesondere Börsendaten, bestimmter Videotextsignale ausgewählt und gespeichert werden, welche den gezielten automatischen Zugriff auf die individuellen Daten, insbesondere Börsendaten, ermöglichen.

Im weiteren wird die Erfindung beispielhaft für eine Anwendung auf Börsendaten beschrieben.

Der Vorteil der Erfindung ist darin zu sehen, daß es nicht für jeden Zugriff auf in Videotextsignalen enthaltene individuelle Börsendaten nötig ist, die einzelnen Seitennummern und/oder Unterseitennummern eingegeben. Dies ist insbesondere vorteilhaft, wenn auf eine Vielzahl von individuellen Börsendaten auf einer Vielzahl von Videotextseiten und/oder Videotextunterseiten zugegriffen werden soll, weil dann entsprechend viele Seitennummern und/oder Unterseitennummern nicht eingegeben werden müssen. Ebenso entfällt die Auswahl verschiedener Sender bzw. Kanäle, wenn die individuellen Börsendaten von Videosignalen verschiedener Sender bzw. Kanäle stammen, da entsprechende Senderinformationen zur automatischen Senderauswahl verwendet werden. Außerdem ergibt sich aus der Tatsache, daß für die gewünschten Börsendaten eigene, im Format von vertrauten Videotextseiten aufgebaute Informationen zur Verfügung stehen der Vorteil, daß es nicht mehr nötig ist, die gewünschten Börsendaten aus der Vielzahl der Börsendaten der einzelnen Videotextseiten und/oder Videotextunterseiten zu isolieren. Zusätzlich stehen alle gewünschten und automatisch aktuellen, individuellen Börsendaten sofort zum Abruf bereit.

Bei einer vorteilhaften Weiterbildung stehen dem Benutzer neben den gewünschten aktuellen Börsendaten Vergleichsinformationen zur Verfügung, die ihm Rückschlüsse und einen leichten Überblick über eigene Investitionen erlauben.

Weitere Vorteile der vorliegenden Erfindung ergeben sich aus den abhängigen Ansprüchen sowie der nachfolgenden Beschreibung einer Ausführungsform einer erfindungsgemäßen Vorrichtung anhand von Figuren.

Es zeigt:
- Fig. 1: ein Prinzipschaltbild eines Ausführungsbeispiels einer die erfindungsgemäße Vorrichtung aufweisenden Fernsehgeräts,
- Fig. 2: eine individuelle Auswahl von Börsendaten mittels einer auf einem Bildschirm dargestellten Videotextseite,
- Fig. 3: eine Erstellung eines individuellen Portfolios mittels einer Bildschirmdarstellung, und
- Fig. 4: eine Wertentwicklung eines individuellen Portfolios mittels einer Bildschirmdarstellung.

Zur Erleichterung des Verständnisses der vorliegenden Erfindung sind in den Figuren nur die Bestandteile des Ausführungsbeispiels dargestellt, die im Zusammenhang mit der Erfindung von Bedeutung sind.

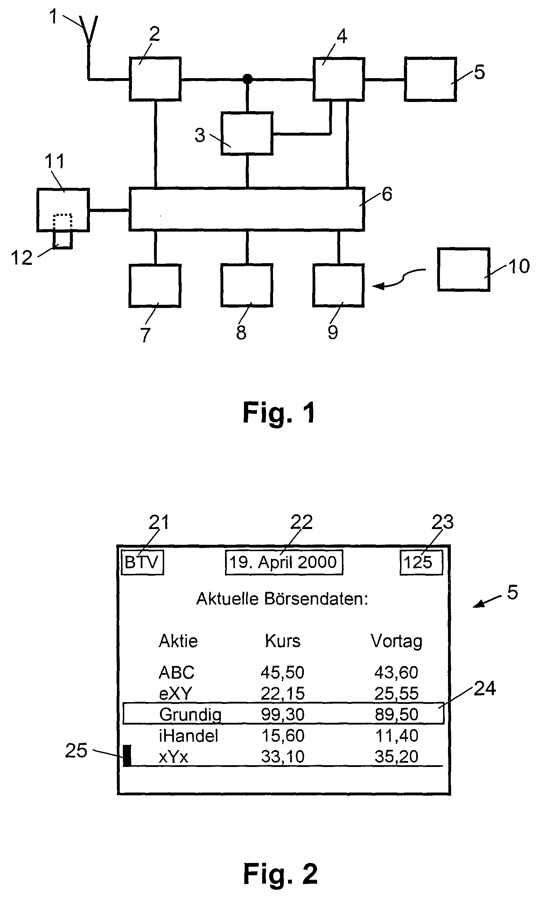

Figur1 zeigt ein Ausführungsbeispiel eines die erfindungsgemäße Vorrichtung aufweisenden Fernsehgeräts. Das Fernsehgerät weist einen Signaleingang auf, an dem beispielhaft eine Antenne 1 angeschlossen ist. Statt einer Antenne kann auch eine Satellitenantenne oder ein Kabelanschluß vorgesehen sein. An die Antenne 1 angeschlossenen ist ein Tuner 2 mit Zf-Teil. Am Ausgang des Tuners 2 sind ein Videotextdecoder 3 und eine Signalverarbeitung 4 angeschlossen. Die Signalverarbeitung 4 bereitet das vom Tuner 2 stammende Signal und/oder das vom Videotextdecoder 3 stammende Signal in bekannter Weise für die Wiedergabe auf einem Bildschirm 5 auf. Sämtliche Bestandteile des Fernsehgeräts werden von bzw. über eine Steuereinheit 6, beispielsweise einem Mikroprozessor, gesteuert. Die Steuereinheit 6 weist darüber hinaus einen Arbeitsspeicher 7, z. B. einen RAM-Speicher, und einen nichtflüchtigen Speicher 8 zur Speicherung von Betriebssoftware und Daten, z. B. einen EEPROM-Speicher, auf. Ebenfalls an die Steuereinheit 6 angeschlossen ist eine Bedieneinrichtung 9, 10 für das Fernsehgerät, die z. B. aus einem Frenbedienungsempfänger 9 und einem Fernbedienungsgeber 10 besteht.

In einer vorteilhaften Ausgestaltung der Erfindung sind zweit Tuner 2 vorgesehen, welche unabhängig voneinender betrieben werden können und unterschiedliche Quellen empfangen können. Hierdurch ist es möglich mittels dem ersten Tuner ein Fernsehsignal zu empfangen und auf dem Bildschirm 5 darzustellen, während der zweite Tuner im Hintergrund Fernsehsignale für die "Börsendaten". Im weiteren ist die Möglichkeit vorgesehen eine Bild-in-Bild-Darstellung auf dem Bildschirm 5 zu ermöglichen. Bei der Bild-in-Bild-Darstellung wird auf einem Bereich des Bildschirmes das Fernsehsignal wiedergegeben und auf dem anderen Bereich die Börsendaten dargestellt.

In Figur 2 ist eine individuelle Auswahl von Börsendaten mittels einer auf dem Bildschirm 5 dargestellten Videotextseite gezeigt. Die Videotextseite enthält eine Senderinformation 21 von welchem Sender, z. B. BTV, die die Videotextseite enthaltenden Videosignale stammen. Außerdem ist eine Datumsangabe 22, z. B. 19. April 2000, und eine Seitennummer 23, z. B. 125, enthalten. Darüber hinaus werden als aktuelle Börsendaten beispielsweise die aktuellen Kurse sowie die Kurse des Vortags für verschiedene Aktien angegeben.

Mittels der Bedieneinrichtung 9, 10 kann ein Benutzer individuelle Börsendaten auswählen, die beispielsweise die von ihm gehaltenen Aktien betreffen. Dazu kann er z. B. mittels auf dem Fernbedienungsgeber 10 vorhanden Tasten einen Cursor 25 über den Bildschirm 5 steuern und mittels einer der Tasten die Aktien auswählen, die sich in seinem Portfolio befinden. Im dargestellten Beispiel wurde die Aktie der Firma Grundig AG ausgewählt. Nach der Auswahl ist die entsprechende Aktie kenntlich gemacht, z. B. mittels eines Rahmens 24. Durch die Auswahl über die Bedieneinrichtung 9, 10 wird bewirkt, daß die Steuereinheit 6 die für das Wiederauffinden der entsprechenden Börsendaten erforderlichen Informationen im nichtflüchtigen Speicher 8 speichert. Diese Informationen umfassen die Senderinformation 21, die Seitennummer 23 und/oder eine Unterseitennummer, sowie die ausgewählte Aktie 24. Die Information über die ausgewählte Aktie kann beispielsweise aus der Zeilennummer bestehen, die der Zeile entspricht, in der die Daten der ausgewählten Aktie auf der entsprechenden Videotextseite stehen. Ebenso ist es möglich, daß der Name der Aktie gespeichert wird. Statt der Senderinfomation 21 der Videotextseite kann auch die Abstimminformation des Tuners 2, z. B. eine Nummer des eingestellten Kanals, abgespeichert werden.

Die oben beschriebene Vorgehensweise zur Auswahl von Börsendaten wird so oft vom Benutzer wiederholt, bis die zum Wiederauffinden aller Aktien, die sich im Portfolio des Benutzers befinden, benötigten Informationen erfaßt sind.

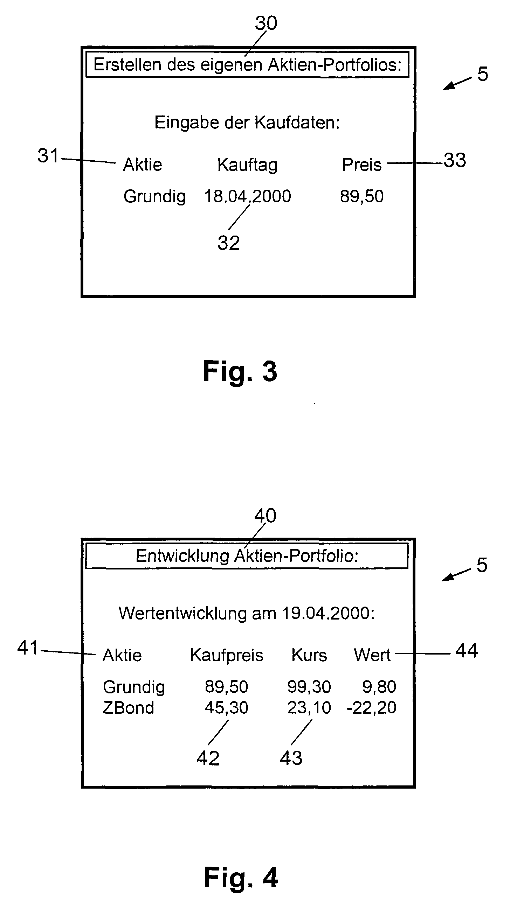

Wenn, wie oben im Zusammenhang mit Figur 2 erläutert, bestimmte Börsendaten mittels der Bedieneinrichtung 9, 10 ausgewählt werden, kann es vorgesehen sein, weitere individuelle Daten zusammen mit den für das Wiederauffinden der Börsendaten nötigen Informationen abzuspeichern. In Figur 3 eine Bildschirmdarstellung 5 für die Erstellung eines individuellen Portfolios 30 gezeigt.

Beispielsweise kann es vorgesehen sein, zu einer ausgewählten Aktie 31 eine Datumsangabe wie einen Kauftag 32 und einen für die Aktie tatsächlich gezahlten Preis 33 mittels der Tastatur des Fernbedienungsgebers 10 einzugeben und unter Steuerung der Steuereinheit im nichtflüchtigen Speicher 8 zu speichern.

In Figur 4 ist eine Wertentwicklung 40 eines individuellen Portfolios mittels einer Bildschirmdarstellung 5 gezeigt. Für den aktuellen Tag, im Beispiel den 19.04.2000, ist die Wertentwicklung für im Portfolio eingetragene Aktien 41 dargestellt, wobei der oben beschriebene, tatsächlich bezahlte Preis 42 einem aktuellen Kurs 43 gegenübergestellt wird und ein sich daraus ergebender Wert 44 für jede Aktie 41 dargestellt wird. Die dazu nötigen Berechnungen werden von der Steuereinheit 6 aufgrund der im nichtflüchtigen Speicher 8 gespeicherten Daten sowie der aus den - wie oben beschrieben - ausgewählten Videotextseiten entnommenen Daten vorgenommen. Weitere Berechnungen, wie z. B. der Gesamtwert des Portfolios, wofür noch die jeweilige Anzahl der verschiedenen Aktien benötigt wird, sind möglich. Die Auswertung erfolgt laufend während des Betriebs und/oder Stand-by-Betriebs des Fernsehgeräts, und die ermittelten Daten werden im Arbeitsspeicher 7 und/oder im nichtflüchtigen Speicher 8 gespeichert, so daß jederzeit aktuelle Börsendaten vorliegen.

Um die Aktualisierung fortlaufend zu ermöglichen kann ein zweiter Tuner und evtl. ein zweiter Videotextdecoder vorgesehen sein, welche nur der Aktualisierung der Börsendaten dienen. Damit ist es unabhängig von Tuner 2 und Videotextdeocer 3 möglich, die Videotextsignale beliebiger Sender bzw. Kanäle auszuwerten, wenn während des Betriebs des Fernsehgeräts der Tuner 2 auf einen bestimmten Sender bzw. Kanal abgestimmt ist. Zur schnelleren Auswertung kann es auch vorgesehen sein, daß der oder die Videotextdecoder Speicher enthalten, die der Speicherung vorbestimmter Videotextseiten dienen, damit diese ohne Wartezeit zur Verfügung stehen.

Die Darstellung der in den Figuren 3 und 4 gezeigten Bildschirmdarstellungen wird von der Steuereinheit 6 erzeugt und entweder direkt über die Signalverarbeitung 4 auf dem Bildschirm 5 dargestellt oder unter Einbeziehung des Videotextdecoders 3.

Die oben beschriebene Erzeugung und Darstellung von individuellen Börsendaten läßt sich für den Benutzer besonders vorteilhaft vornehmen, wenn eine Menüsteuerung vorgesehen wird. Die Menüsteuerung ist Bestandteil einer Bedienoberfläche des Fernsehgeräts, die die allgemeine Bedienung des Fernsehgeräts erlaubt. Ein Bestandteil der Menüsteuerung kann der oben beschriebe Zugriff auf in Videotextsignalen enthaltene Börsendaten sein, wobei die oben erläuterten einzelnen Schritte einzelne Unterpunkte des Börensbestandteils der Menüsteuerung sein können.

Der Zugang zu den Börsendaten, insbesondere zu dem beschriebenen individuellen Portfolio kann zugangsgeschützt sein und nur über die Eingabe einer Geheimzahl aktivierbar sein. Es können auch mehrere Portfolios, z. B. für unterschiedliche Benutzer, vorhanden sein. Diese können zur Unterscheidung unterschiedliche Geheimzahlen aufweisen.
Neben der oben beschriebenen Eingabe von individuellen Börsendaten, wie Kauftag und Preis, kann die Eingabe und Speicherung anderer aktienrelevanter Daten wie ein Stop Loss oder ein Limit vorgesehen sein. Bei Erreichen der so eingegebenen Daten können die entsprechenden Aktien beispielsweise in der Bildschirmdarstellung farblich gekennzeichnet werden. Außerdem kann die Eingabe eines beliebigen Zeitraums vorgesehen sein, für den eine Trendanzeige für bestimmte oder alle Aktien des Portfolios erstellt werden soll. Neben der Überwachung von Aktien des Portfolios können auch Aktien, die nicht im Portfolio enthalten sind überwacht werden. Besonders interessant ist dabei beispielsweise eine Kursentwicklung oder Trendanalyse. Übersteigt oder untersteigt der Kurs von Aktien eine bestimmte Schwelle oder eine bestimmte Wertänderung, die vorgebbar sein können, werden die entsprechenden Aktien angezeigt.

Wie in Figur 1 dargestellt, kann das Fernsehgerät zusätzlich einen Kartenleser 11 für Chipkarten 12 aufweisen. In vorteilhafter Weise ist der Kartenleser 11 durch ein Common-Interface ersetzbar, die Chipkarte 12 durch eine PCMCIA-Karte ersetzbar. Derartige Kartenleser 11 und Chipkarten 12 werden beispielsweise für den Empfang und die Wiedergabe von verschlüsselten Fernsehsignalen benötigt. Zusätzlich kann ein auf der Chipkarte 12 vorhandener nichtflüchtiger Speicher dazu verwendet werden, die Daten von individuellen Portfolios zu speichern. Dies hat für den Benutzer den Vorteil, daß er seine aktuellen Informationen zu seinem individuellen Portfolio nicht nur auf einem beispielsweise in seiner Wohnung aufgestellten Fernsehgerät erhalten kann, wenn er die Chipkarte mit sich führt und entsprechend ausgestattete Fernsehgeräte an anderen Orten vorhanden sind.

Statt, wie oben beschrieben, einen separaten Videotextdecoder 3 vorzusehen, ist es auch möglich, daß die Steuereinheit 6 den Videotextdecoder durch entsprechende Software bildet.

Statt die erfindungsgemäße Vorrichtung, wie oben beschrieben, in einem Fernsehgerät vorzusehen, ist es auch möglich, eine entsprechende Vorrichtung in einem Satellitenempfänger, einer Settopbox oder dergleichen einzubauen. Ebenso ist es offensichtlich, daß statt der oben im Zusammenhang mit Börsendaten erwähnten Aktien, Daten von anderen börsennotierten Wertpapieren wie Optionen, Investment-Fonds, Rentenpapieren usw. ausgewertet und dargestellt werden können.

Die in der obigen Beschreibung als Videotextsignale bzw. Videotextseiten bezeichneten Informationen in Fernsehsignalen sind auch als Teletextsignale bzw. Teletextseiten bekannt.

## Patentansprüche

1. Vorrichtung für den Zugriff auf in Videotextsignalen enthaltene Börsendaten, mit
mindestens einem Tuner (2),
mindestens einem Videotextdecoder (3), und
einer Steuereinheit (6) mit einem Speicher (7,8),
**dadurch gekennzeichnet,daß**
im Speicher (8) Informationen für den Zugriff auf individuelle Börsendaten bestimmter Videotextsignale gespeichert werden, wobei die Steuereinheit (6) mittels der im Speicher (8) gespeicherten Informationen den Tuner (2) und den Videotextdecoder (3) für den Zugriff auf die individuellen Börsendaten der bestimmten Videotextsignale steuert.

2. Vorrichtung nach Anspruch 1,
**dadurch gekennzeichnet, daß**
die Informationen im Speicher (8) für jedes individuelle Börsendatum eine Kanal- oder Senderinformation (21) und eine Videotextseitennummer und/oder Videotextunterseitennummer (23) umfassen und/oder der Speicher (8) weitere individuelle Daten speichert.

3. Vorrichtung nach einem der Ansprüche 1 oder 2,
**dadurch gekennzeichnet, daß**
eine Bedieneinrichtung (9, 10) für die Auswahl der individuellen Börsendaten und/oder die Eingabe der weiteren individuellen Daten vorgesehen ist.

4. Vorrichtung nach einem der Ansprüche 1 bis 3,
**dadurch gekennzeichnet, daß**
für den Zugriff auf die individuellen Börsendaten ein zusätzlicher Tuner vorgesehen ist und/oder für den Zugriff auf die individuellen Börsendaten ein zusätzlicher Videotextdecoder vorgesehen ist und/oder die individuellen Börsendaten und/oder die weiteren individuellen Daten und/oder daraus von der Steuereinheit (6) abgeleitete Vergleichsdaten auf einem Bildschirm (5) dargestellt werden.

5. Vorrichtung nach einem der Ansprüche 1 bis 4,
**dadurch gekennzeichnet, daß**
die Steuereinrichtung (6) während des Betriebs und/oder Stand-by-Betriebs der Vorrichtung laufend die Auswertung der individuellen Börsendaten vornimmt und zusammen mit den weiteren individuellen Daten die abgeleiteten Vergleichsdaten erzeugt und/oder die bei der laufenden Auswertung durch die Steuereinrichtung (6) ermittelten individuellen Börsendaten sowie die abgeleiteten Vergleichsdaten im Speicher (7, 8) gespeichert werden.

6. Vorrichtung nach einem der Ansprüche 1 bis 5,
**dadurch gekennzeichnet, daß**
eine portabler Speicher (11, 12), insbesondere eine Chipkarte (12) mit einem Chipkartenleser (11), zur Speicherung der Informationen für den Zugriff auf die individuellen Börsendaten der bestimmten Videotextsignale und/oder der weiteren individuellen Daten und/oder der abgeleiteten Vergleichsdaten vorgesehen ist und/oder eine portabler Speicher (11, 12), insbesondere eine PCMCIA-Karte (12) mit einem Common-Interface (11), zur Speicherung der Informationen für den Zugriff auf die individuellen Börsendaten der bestimmten Videotextsignale und/oder der weiteren individuellen Daten und/oder der abgeleiteten Vergleichsdaten vorgesehen ist.

7. Vorrichtung nach einem der Ansprüche 1 bis 6,
**dadurch gekennzeichnet, daß**
die Steuereinheit (6) erst nach Eingabe einer Geheimzahl mittels der Bedieneinrichtung (9, 10) auf die im Speicher (7, 8) und/oder im portablen Speicher (12) gespeicherten individuellen Börsendaten und/oder weiteren individuellen Daten und/oder abgeleiteten Vergleichsdaten zugreift.

8. Verfahren für den Zugriff auf in Videotextsignalen enthaltene Börsendaten, mit folgenden Schritten:
Auswahl von Informationen für den Zugriff auf individuelle Börsendaten bestimmter Videotextsignale,
Speicherung der ausgewählten Informationen für den Zugriff auf individuelle Börsendaten bestimmter Videotextsignale, und
Zugriff auf die individuellen Börsendaten der bestimmten Videotextsignale mittels der gespeicherten Informationen.

9. Verfahren nach Anspruch 8,
**dadurch gekennzeichnet, daß**
die Informationen für jedes individuelle Börsendatum eine Kanal- oder Senderinformation (21) und eine Videotextseitennummer und/oder Videotextunterseitennummer (23) umfassen.

10. Verfahren nach Anspruch 8 oder 9,
**dadurch gekennzeichnet,daß**
weitere individuelle Daten, welche die individuellen Börsendaten betreffen, eingegeben und gespeichert werden können und/oder die weiteren individuellen Daten und die individuellen Börsendaten zur Berechnung von Vergleichsdaten verwendet werden.

11. Verfahren nach einem der Ansprüche 8 bis 10,
**dadurch gekennzeichnet, daß**
der Zugriff auf die individuellen Börsendaten und/oder die Berechnung der Vergleichsdaten laufend erflogt, wobei die dabei ermittelten individuellen Börsendaten und/oder die Vergleichsdaten gespeichert werden und/oder die individuellen Daten und/oder die weiteren Daten und/oder die Vergleichsdaten auf einem Bildschirm dargestellt werden und/oder die Darstellung der individuellen Daten und/oder der weiteren Daten und/oder der Vergleichsdaten auf dem Bildschirm erst nach Eingabe einer Geheimnummer möglich ist.
